# EUROPÄISCHE PATENTSCHRIFT

(11) **EP 1 027 578 B1**
(45) Veröffentlichungstag und Bekanntmachung des Hinweises auf die Patenterteilung: **17.03.2004**
(21) Anmeldenummer: 98955377.1
(22) Anmeldetag: 07.10.1998
(51) Int. Cl.: G01C 21/20

(54) **VERFAHREN UND ANORDNUNG ZUR RECHNERGESTÜZTEN BEARBEITUNG EINES GRAPHEN**
METHOD AND DEVICE FOR COMPUTER ASSISTED GRAPH PROCESSING
PROCEDE ET DISPOSITIF DE TRAITEMENT ASSISTE PAR ORDINATEUR D'UN GRAPHE

(30) Priorität: 27.10.1997 DE 19747401
(43) Veröffentlichungstag der Anmeldung: 16.08.2000
(73) Patentinhaber: SIEMENS AKTIENGESELLSCHAFT, 80333 München (DE)
(72) Erfinder: LAUTHER, Ulrich, D-80686 München (DE); ENDERS, Reinhard, D-80999 München (DE)
(86) Internationale Anmeldenummer: PCT/DE1998/002965
(87) Internationale Veröffentlichungsnummer: WO 1999/022205

(56) Entgegenhaltungen:
- EP-A- 0 504 854
- JUNG S ET AL: "HITI GRAPH MODEL OF TOPOGRAPHICAL ROAD MAPS IN NAVIGATION SYSTEMS" PROCEEDINGS OF THE TWELFTH INTERNATIONAL CONFERENCE ON DATA ENGINEERING, NEW ORLEANS, FEB. 26 - MAR. 1, 1996, Nr. CONF. 12, 26. Februar 1996, Seiten 76-84, XP000632587 SU S Y W (ED )
- LIU B ET AL: "USING KNOWLEDGE ABOUT THE ROAD NETWORK FOR ROUTE FINDING" PROCEEDINGS OF THE CONFERENCE ON ARTIFICIAL INTELLIGENCE FOR APPLICATIONS, LOS ANGELES, FEB. 20 - 23, 1995, Nr. CONF. 11, 20. Februar 1995, Seiten 306-312, XP000547062 INSTITUTE OF ELECTRICAL AND ELECTRONICS ENGINEERS

## Beschreibung

Die Erfindung betrifft eine rechnergestützte Bearbeitung eines Graphen, der Knoten und Kanten aufweist.

In verschiedensten rechnergestützten Anwendungen wird eine schnelle, rechnergestützte Ermittlung kürzester Pfade in gerichteten oder ungerichteten Graphen benötigt.

Hierzu sind eine Vielzahl von Verfahren zur Ermittlung kürzester Pfade bekannt. Eine Übersicht über bekannte Verfahren, z.B. das Moore/Pape-Verfahren oder auch der Dijkstra-Algorithmus, ist in [1] zu finden. Ein entsprechendes Verfahren weist jedoch u.a. den Nachteil auf, daß bei weit auseinanderliegenden Start- und Zielknoten fast alle Knoten des Graphen berücksichtigt werden müssen, um den kürzesten Pfad zwischen einem vorgegeben Startpunkt und einem vorgegebenen Zielpunkt zu bestimmen.

Aus [2], [3] ist ein rechnergestütztes Navigationssystem in einem Kraftfahrzeug (Kfz) bekannt. In einem Speicher des Navigationssystems sind Landkarten gespeichert, wobei einzelne Orte auf der Landkarte (z.B. Häuser, Bahnhöfe, Sehenswürdigkeiten, etc.) durch Knoten eines Graphen repräsentiert werden. Die Verbindungen zwischen den Orten (Straßen, Wege, etc.) werden durch Kanten des Graphen repräsentiert. In dem Navigationssystem wird für eine vorgegebene Startposition und eine vorgegebene Zielposition unter Verwendung eines Verfahrens zur Bestimmung kürzester Pfade der kürzeste bzw. schnellste Pfad zwischen der Startposition und der Zielposition bestimmt.

Aus [4] ist ein Verfahren zur Abbildung eines Graphen in einen Speicher durch eine Anzahl von Tiefen- und Breitensuchen in unterschiedlicher Richtung bekannt.

In [5] ist eine Ortsdatenbank für die Ermittlung von Routen innerhalb eines Verkehrswegenetzes bekannt.

In [6] wird eine Beschleunigung des Verfahrens dadurch erreicht, dass eine untere Schranke der noch zu überbrückenden Entfernung zum Ziel in die Kostenfunktion einbezogen wird, wobei durch die Einführung einer Hierarchie von Gebieten eine untere Schranke für die Länge des kürzesten Pfades schnell berechnet und dann zur Beschränkung des Suchraumes verwendet wird.

In [7] ist ein wissensbasiertes System gezeigt, das das Verhalten eines menschlichen Problemlösers nachzubilden versucht, wobei Straßenklassen definiert und für weite Entfernungen eine Suche auf die "wichtigsten" Straßen beschränkt wird.

Im folgenden ist unter einem kürzesten Pfad der unter einer vorgegebenen Kostenfunktion auf den Kanten eines Graphen (z.B. geographische Länge, erwartete Fahrzeit, etc.) billigste Pfad zu verstehen.

Das bekannte Navigationssystem weist den Nachteil auf, daß eine optimierte Route, d.h. der kürzeste Pfad zwischen der Startposition und der Zielposition nur unter sehr hohem Rechenaufwand zu ermitteln ist, so daß bei schneller Bearbeitung eines Auftrags zur Routenermittlung erhebliche Rechenleistung zur Verfügung gestellt werden muß, wodurch das Navigationssystem erheblich teuer ist.

Bei einigen Anwendungen müssen in einem vorgegebenen Netzwerk sehr viele kürzeste Pfade bestimmt werden, wodurch das Kriterium einer schnellen Ermittlung kürzester Pfade erheblich weiter an Bedeutung gewinnt.

Bei zentralisierten Systemen muß ein zentraler Server eine Vielzahl von Anfragen zur Routenermittlung einer Vielzahl von Client-Navigationssystemen bedienen und hierzu eine große Anzahl kürzester Pfade schnell bestimmen können.

Somit liegt der Erfindung das Problem zugrunde, einen Graphen, der Knoten und Kanten aufweist, derart zu bearbeiten, daß eine Ermittlung eines kürzesten Pfades schneller möglich wird, als dies mit den bekannten Verfahren möglich ist.

Das Problem wird durch das Verfahren gemäß Patentanspruch 1 sowie durch die Anordnung gemäß Patentanspruch 9 gelöst.

Bei dem Verfahren wird ein Graph bearbeitet, der Knoten und Kanten aufweist. Die Knoten des Graphen sind in mindestens zwei Gebiete gruppiert. Für jedes Gebiet und für mindestens einen Teil der Knoten des Gebietes werden folgende Schritte durchgeführt:
a) es wird ein Knoten als Wurzelknoten ausgewählt,
b) für den Wurzelknoten wird ein Baum kürzester Pfade in dem Graph mit dem Wurzelknoten als Wurzel des Baums ermittelt,
c) es wird ein Knoten einer Kante des Graphen für das Gebiet dann markiert, wenn ausgehend von dem Knoten zu dem Wurzelknoten die Kante in einem kürzesten Pfad zum Wurzelknoten enthalten ist.

Die Anordnung zur Bearbeitung eines Graphen, der Knoten und Kanten aufweist, enthält eine Prozessoreinheit, die derart eingerichtet ist, daß für jedes Gebiet und für mindestens einen Teil der Knoten, die in mindestens zwei Gebiete gruppiert sind, des Gebietes folgende Schritte durchgeführt werden:
a) es wird ein Knoten als Wurzelknoten ausgewählt,
b) für den Wurzelknoten wird ein Baum kürzester Pfade in dem Graph mit dem Wurzelknoten als Wurzel des Baums ermittelt,
c) es wird. ein Knoten einer Kante des Graphen für das Gebiet dann markiert, wenn ausgehend von dem Knoten zu dem Wurzelknoten die Kante in einem kürzesten Pfad zum Wurzelknoten enthalten ist.

Der kürzeste Pfad kann in dem Baum kürzester Pfade enthalten sein oder in einem weiteren kürzesten Pfad zum Wurzelknoten, der nicht in dem Baum kürzester Pfad enthalten ist.

Durch diese äußerst einfache Art der Vorverarbeitung eines Graphen wird bei der Ermittlung kürzester Pfade in dem bearbeiteten Graph eine erhebliche Steigerung der Ermittlungsgeschwindigkeit eines kürzesten Pfades erreicht.

Zur Berechnung der kürzesten Pfade in der jeweiligen Anwendung sowie auch in der Vorverarbeitung, d.h. in dem Verfahren zur Bearbeitung des Graphen, kann jedes beliebige Verfahren zur Ermittlung kürzester Pfade, z.B. das Moore/Pape-Verfahren oder auch der Dijkstra-Algorithmus in der jeweiligen Anwendung auch bidirektional mit oder ohne Zielausrichtung über Restweglängenabschätzung, oder jedes weitere Verfahren zur Ermittlung kürzester Pfade eingesetzt werden.

Durch die erhebliche Rechenzeiteinsparung bei der Ermittlung kürzester Pfade durch die Vorverarbeitung gemäß der Erfindung wird es ferner möglich, das Navigationssystem mit erheblich geringerer Rechenleistung auszustatten, so daß die Kosten des Navigationssystem wesentlich reduziert werden können.

Weiterbildungen der Erfindung ergeben sich aus den abhängigen Ansprüchen.

Es ist in einer Ausgestaltung des Verfahrens und der Anordnung vorteilhaft, unter Verwendung der markierten Knoten, d.h. unter Verwendung des bearbeiteten Graphen, einen kürzesten Pfad zwischen einem vorgegebenen Startknoten und einem vorgegebenen Zielknoten zu ermitteln. Durch diese Weiterbildung wird ein Verfahren zur Ermittlung kürzester Pfade angegeben, mit dem eine erneblich schnellere Ermittlung des kürzesten Pfades erreicht wird.

In einer weiteren Ausgestaltung der Erfindung ist es vorteilhaft, daß zur Ermittlung des kürzesten Pfades zwischen dem Startknoten und dem Zielknoten folgende Schritte durchgeführt werden:
- es wird ein Startgebiet ermittelt und gespeichert, zu dem der Startknoten gruppiert ist,
- es wird ein Zielgebiet ermittelt und gespeichert, zu dem der Zielknoten gruppiert ist,
- bei der Ermittlung des kürzesten Pfades ausgehend von Startknoten und/oder ausgehend von Zielknoten werden nur die Kanten berücksichtigt, für die gilt:
   -- ausgehend von dem Startknoten und/oder ausgehend von dem Zielknoten in dem Startgebiet und/oder in dem Zielgebiet ist ein erster Knoten der Kante für das Zielgebiet und/oder für das Startgebiet markiert, und
   -- ausgehend von dem Startknoten und/oder ausgehend von dem Zielknoten in dem Startgebiet und/oder in dem Zielgelei ist ein zweiter Knoten der Kante für das Startgebiet und/oder für das Zielgebiet markiert.

Durch diese Vorgehensweise wird eine erhebliche Rechenzeiteinsparung bei der Ermittlung kürzester Pfade erreicht. Dabei ist zu bemerken, daß die Vorverarbeitung unabhängig von der Anzahl der Anfragen nur einmal oder- wenn auf veränderte Verkehrssituationen (Staus, Sperrungen von Straßen, usw.) reagiert werden soll - in regelmäßigen Abstanden durchgeführt wird bzw. werden.

Ein Ausführungsbeispiel der Erfindung ist in den Figuren dargestellt und wird im weiteren näher erläutert.

Es zeigen
- Fig. 1: eine Skizze einer Landkarte, deren Inhalt durch einen Graphen mit Knoten und Kanten repräsentiert wird;
- Fig. 2: eine Skizze eines Navigationssystems;

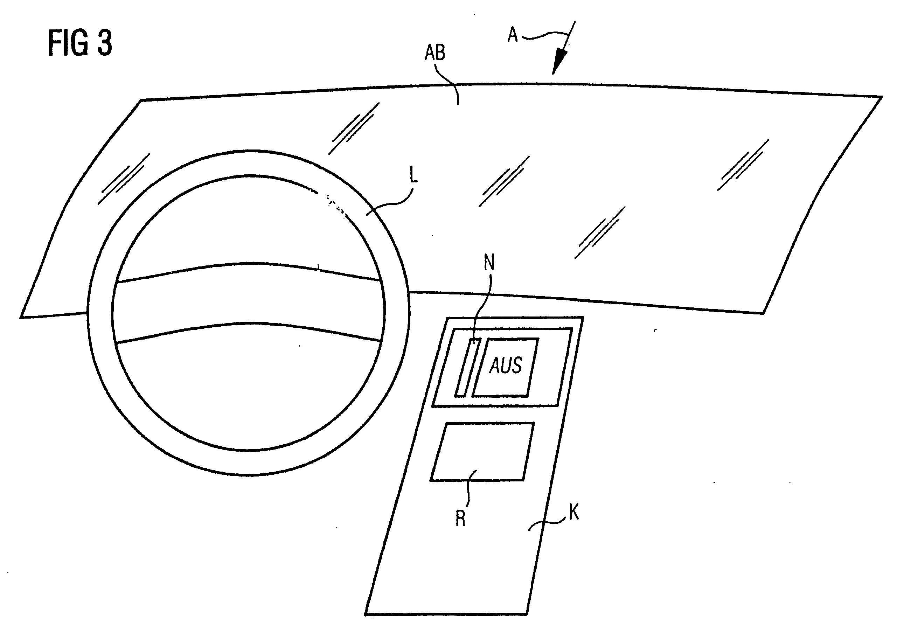

- Fig. 3: eine Skizze eines Cockpits eines Kraftfahrzeugs, in dem ein Navigationssystem vorgesehen ist;
- Fig. 4: in einem Blockdiagramm eine Vielzahl von Navigationssystemen und einen Navigationsserver, dem eine Vielzahl von Anfragen zugeführt wird, für die jeweils der Server eine Route mit dem kürzesten Pfad zwischen den angegebenen Startpositionen bzw. Zielpositionen ermittelt wird;
- Fig. 5a und 5b: eine Skizze eines Graphen mit einem Baum kürzester Pfade ausgehend von dem Knoten c (Fig. 5a) und die zugehörige Markierung der Knoten zu den jeweiligen Kanten des Graphen in der Region 1 (Fig. 5b);
- Fig. 6a und 6b: eine Skizze eines Graphen mit einem Baum kürzester Pfade ausgehend von dem Knoten a (Fig. 6a) und die zugehörige Markierung der Knoten zu den jeweiligen Kanten des Graphen in der Region 1 (Fig. 6b);
- Fig. 7a und 7b: eine Skizze eines Graphen mit einem Baum kürzester Pfade ausgehend von dem Knoten b (Fig. 7a) und die zugehörige Markierung der Knoten zu den jeweiligen Kanten des Graphen in der Region 1 (Fig. 7b);
- Fig. 8a und 8b: eine Skizze eines Graphen mit einem Baum kürzester Pfade ausgehend von dem Knoten d (Fig. 8a) und die zugehörige Markierung der Knoten zu den jeweiligen Kanten des Graphen in der Region 2 (Fig. 8b);
- Fig. 9a und 9b: eine Skizze eines Graphen mit einem Baum kürzester Pfade ausgehend von dem Knoten f (Fig. 9a) und die zugehörige Markierung der Knoten zu den jeweiligen Kanten des Graphen in der Region 2 (Fig. 9b);
- Fig. 10a und 10b: eine Skizze eines Graphen mit einem Baum kürzester Pfade ausgehend von dem Knoten e (Fig. 10a) und die zugehörige Markierung der Knoten zu den jeweiligen Kanten des Graphen in der Region 2 (Fig. 10b);
- Fig. 11a und 11b: eine Skizze eines Graphen mit einem Baum kürzester Pfade ausgehend von dem Knoten g (Fig. 11a) und die zugehörige Markierung der Knoten zu den jeweiligen Kanten des Graphen in der Region 3 (Fig. 11b);
- Fig. 12a und 12b: eine Skizze eines Graphen mit einem Baum kürzester Pfade ausgehend von dem Knoten h (Fig. 12a) und die zugehörige Markierung der Knoten zu den jeweiligen Kanten des Graphen in der Region 3 (Fig. 12b);
- Fig. 13a und 13b: eine Skizze des Graphen (Fig. 13a) und eine Tabelle mit den Kanten des Graphen und den Regionen und den entsprechenden Markierungen der Knoten der Kanten für die jeweilige Region, die sich gemäß dem Verfahren insgesamt ergibt (Fig. 13b).

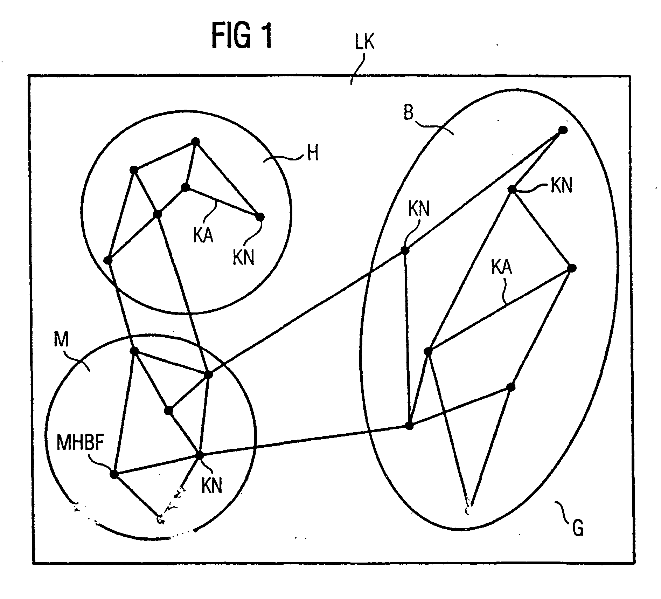

Figur 1 zeigt eine Landkarte LK, deren Inhalt durch einen Graphen G mit Knoten KN und Kanten KA repräsentiert wird. Die Knoten KN des Graphen G repräsentieren Positionen innerhalb der Landkarte, Gebäude, Sehenswürdigkeiten, etc. Die Kanten KA repräsentieren Straßen, allgemein Verbindungen zwischen den Positionen auf der Landkarte LK. Die Knoten KN sind in drei Gebiete H, M, B gruppiert, ein erstes Gebiet M, das das Stadtgebiet von München repräsentiert, ein zweites Gebiet H, das das Stadtgebiet von Hamburg repräsentiert, sowie ein Stadtgebiet B, das die Stadt Berlin repräsentiert.

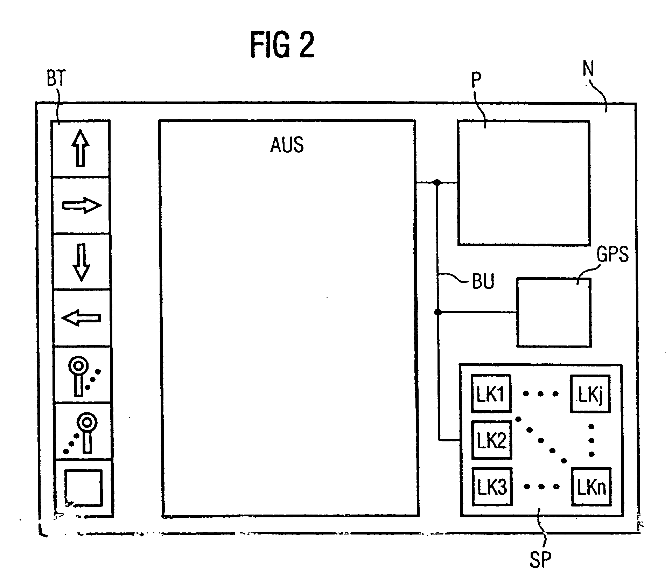

In Figur 2 ist eine Skizze eines Navigationssystems N dargestellt. Das Navigationssystem N weist ein Bedienfeld BT, eine Anzeigeeinheit AUS, eine Prozessoreinheit P, einen Bus BU, ein GPS-System (Global Positioning System), sowie einen Speicher SP, auf.

Mit dem Bedienfeld BT wird das Navigationssystem N bedient.

Auf der Anzeigeeinheit AUS wird einem Benutzer des Navigationssystems N eine Landkarte LKj (j = 1 ... n) und/oder eine Richtungsangabe für eine zu fahrende Strecke angegeben.

Sowohl die Anzeigeeinheit AUS, als auch der Prozessor P, das GPS-System GPS als auch der Speicher SP sind über einen Bus BU miteinander gekoppelt.

In dem Speicher SP sind in digitaler Form die Landkarten LKj gespeichert. Die Landkarten LKj können auch auf anderen Speichermedien, die nicht direkt in dem Navigationssystem N integriert sind, z.B. einer CD-ROM, gespeichert sein.

Das Navigationssystem N ist in einem Cockpit A eines Kraftfahrzeugs eingebaut. Das Cockpit A weist ein Lenkrad L, ein Armaturenbrett AB sowie eine Konsole K auf. Das Navigationssystem N ist ebenso wie ein Radio R in der Konsole K integriert.

Über das Bedienfeld BT wird von einem Benutzer des Navigationssystems N eine gewünschte Startposition und eine gewünschte Zielposition innerhalb der Landkarte LKj vorgegeben, für den der Benutzer eine möglichst optimale Route ermittelt bekommen möchte. Die Routenermittlung basiert auf einem Verfahren zur Ermittlung kürzester Pfade in dem Graphen G, der den Inhalt der Landkarte LKj repräsentiert.

Durch eine Vorverarbeitung des Graphen G wird eine erhebliche Beschleunigung der eigentlichen Ermittlung kürzester Pfade in dem Graphen G erreicht.

Die Vorverarbeitung des Graphen G geschieht nach folgenden Verfahrensschritten:

Die Knoten KN des Graphen G sind in eine beliebige Anzahl von Gebieten M, H, B, gruppiert. Die Gebiete repräsentieren eine logisch zusammenhängende Menge von Positionen innerhalb der Landkarte LKj.

Jeder Knoten KN des Graphen G wird zu genau einem Gebiet M, H, B gruppiert.

Zu jeder Kante KN ((v, w)) des Graphen G werden bei 1 Gebieten (k = 1, ..., 1; 1 bezeichnet die Anzahl der in der Landkarte LKj enthaltenen Gebiete) 2 * 1 Markierungen ermittelt. Die Markierung erfolgt durch einen binären Wert.

Ein erster Knotenwert vflag[i] eines Knotens v der jeweiligen Kante (v, w) wird dann und nur dann auf einen ersten binären Wert gesetzt, d.h. der Knoten v markiert, wenn es einen kürzesten Pfad vom Knoten v aus gibt, der die Kante (v, w) benutzt und in ein Zielgebiet i führt. Ein zweiter Knotenwert wflag[i] wird dann und nur dann gesetzt, wenn es einen kürzesten Pfad vom Knoten w aus gibt, der die Kante (v, w) verwendet und in das Zielgebiet i führt.

Zur Speicherung aller Markierungen werden also 2 * k Bit pro Kante benötigt.

Die Ermittlung der Kantenwerte wird im weiteren noch detailliert erläutert.

Ein Graph G mit mehreren Gebieten, in die die Knoten KN gruppiert sind, enthalten zwei Arten von Kanten:
- interne Kanten, bei denen beide Knoten der Kante im gleichen Gebiet liegen, und
- externe Kanten, bei denen die Knoten der Kante in verschiedenen Gebiet liegen.

Knoten, die zu externen Kanten inzident sind, werden als exportierte Knoten bezeichnet.

Eine einfache Vorgehensweise zur Ermittlung der Knotenwerte ist die folgende:
1. Lösche alle Flags;
2. Für jedes Gebiet i {

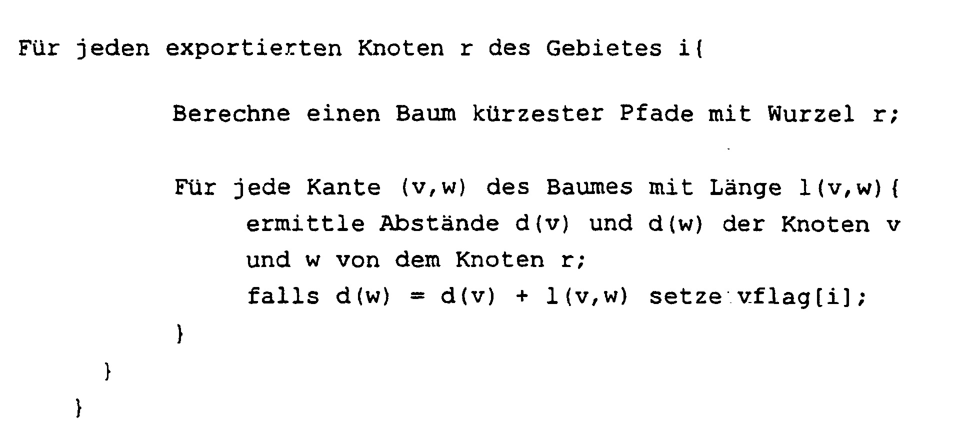

Es wird also für mindestens einen Teil der Knoten jeweils eines Gebietes ein Knoten als Wurzelknoten ausgewählt und für den Graphen G mit dem jeweils aktuellen Wurzelknoten ein Baum kürzester Pfade in dem Graphen G mit dem Wurzelknoten ermittelt. Für alle Kanten (v, w), die in dem jeweiligen Baum kürzester Pfade enthalten sind oder in einem anderen kürzesten Pfad zum Wurzelknoten liegen - dies ist direkt aus den Abständen d(v) und d(w) der Knoten v und w von dem Knoten r ablesbar -, wird der erste Knotenwert vflag[i] auf den ersten binären Wert gesetzt. Dies bedeutet, daß aus den Abständen in dem Baum geschlossen werden kann, ob die jeweilige Kante in einem anderen kürzesten Pfad zum Wurzelknoten enthalten ist.

Zum Ermitteln der Bäume kürzester Pfade kann jeder bekannte Algorithmus zur Ermittlung kürzester Pfade eingesetzt werden. Es hat sich das Verfahren nach Moore/Pape als vorteilhaft herausgestellt.

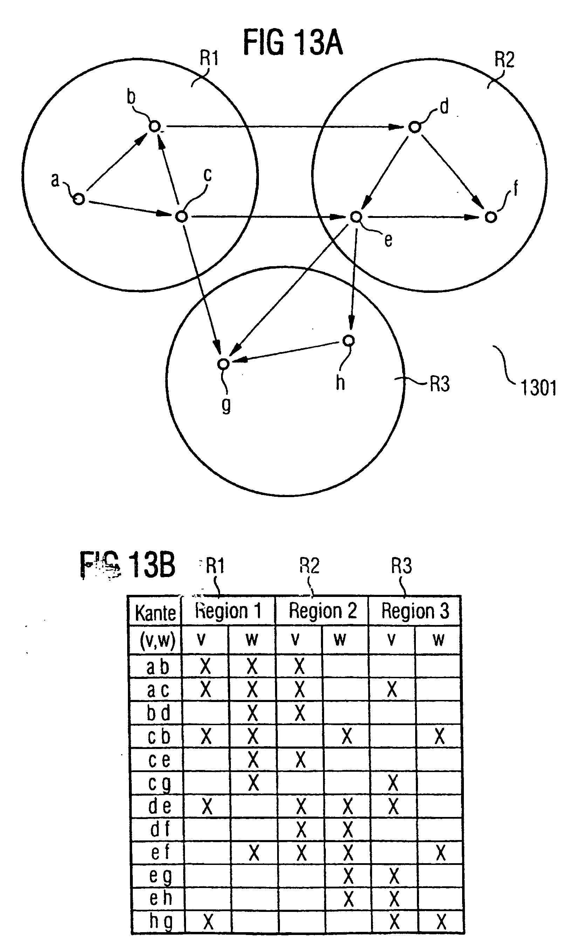

Zur einfacheren Darstellung des oben beschriebenen Verfahrens wird das Verfahren anhand eines Graphen 1301, der in Figur 13a dargestellt ist erläutert. Der Graph 1301 weist 8 Knoten a, b, c, d, e, f, g, h auf. Die 8 Knoten sind in drei Gebiete R1, R2, R3 gruppiert. Ein erstes Gebiet R1 enthält die Knoten a, b, c, ein zweites Gebiet R2 enthält die Knoten d, e, f, und ein drittes Gebiet R3 enthält die Knoten g und h.

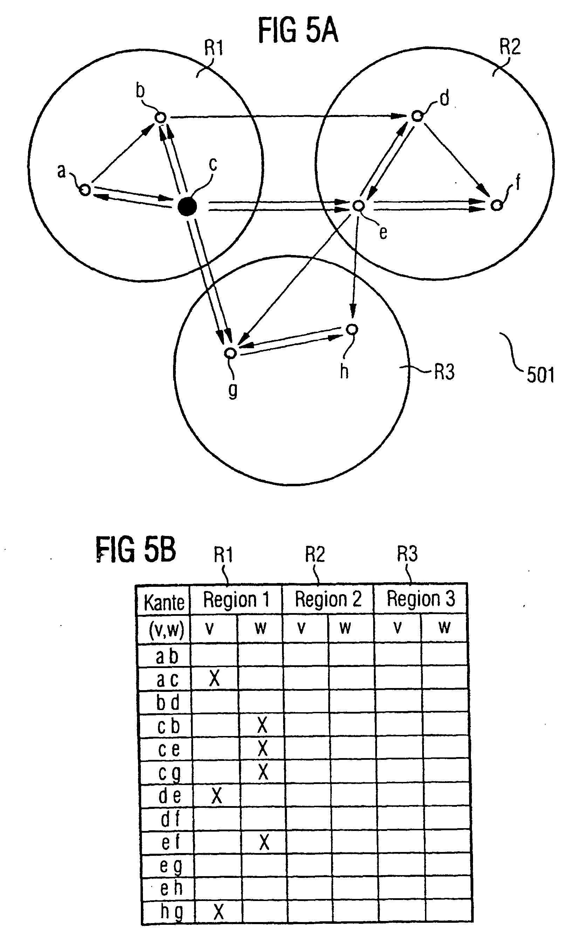

In den Figuren 5a, 6a, 7a, 8a, 9a, 10a, 11a und 12a ist jeweils ebenfalls der Graph 1301 angegeben. Gegenüber dem Graphen 1301 ist jedoch ferner jeweils für einen Knoten des Graphen 1301 als ausgewählter Wurzelknoten der Baum kürzester Pfade mit dem jeweiligen Wurzelknoten dargestellt.

Ein Baum kürzester Pfade 501 mit dem Wurzelknoten c ist in Fig. 5a dargestellt. Ein Baum kürzester Pfade ist jeweils in dem Graphen durch eine zweite Verbindung zwischen den Knoten des Graphen 1301 dargestellt.

Jeweils in den Figuren 5b, 6b, 7b, 8b, 9b, 10b, 11b, 12b ist für den Baum kürzester Pfade der jeweiligen entsprechenden Figuren 5a, 6a, 7a, 8a, 9a, 10a, 11a und 12a eine Tabelle dargestellt. In einer ersten Spalte der Tabelle sind die Kanten (v, w) des Graphen 1301 aufgeführt.

Ferner sind in 3 Hauptspalten die Regionen R1, R2, R3 dargestellt. In jeder Hauptspalte R1, R2, R3 sind jeweils zwei Spalten v, w enthalten, die den ersten Knotenwert bzw. zweiten Knotenwert der jeweiligen Kante (v, w) in der Region R1, R2, R3 repräsentieren.

Ein erster Knotenwert in einem Feld, das eindentig durch eine Kante (v, w) und eine Hauptspalte und einer Spalte in einer Hauptspalte bezeichnet ist, ist durch ein Kreuz in dem jeweiligen Feld dargestellt. Ein erster Knotenwert wird dann markiert, wenn ausgehend von dem Knoten der Kante (v, w) ein kürzester Pfad zu dem Wurzelknoten c führt, der die jeweilige Kante (v, w) enthält.

In der ersten Region R1 ist die Kante (a, b) in keinem kürzesten Pfad zu dem Wurzelknoten c enthalten. Somit wird für diesen Baum kürzester Pfade 501 für die Kante (a, b) keine Markierung gesetzt.

Für die Kante (a, c) wird ermittelt, daß die Kante (a, c) in dem Baum kürzester Pfade 501 mit dem Wurzelknoten c enthalten ist. Ausgehend von dem Knoten a führt ein kürzester Pfad mit der Kante (a, c) zu dem Wurzelknoten c. Somit wird der Knoten a für die erste Region R1 markiert, da das Zielgebiet die erste Region R1 ist.

Die Kante (b, d) ist nicht in dem Baum kürzester Pfade 501 mit Wurzelknoten c enthalten. Für die Kante (c, b) gilt, daß ausgehend von dem Knoten b ein kürzester Pfad mit der Kante (c, b) zu dem Wurzelknoten c führt. Somit wird der Knoten b für die erste Region R1 markiert.

Entsprechendes gilt für die Kanten (c, e) und (c, g). Für die Kante (d, e) gilt, daß ausgehend von dem Knoten d ein kürzester Pfad zu dem Wurzelknoten c besteht, mit den Kanten (d, e) und (c, e). Somit ist die Kante (d, e) enthalten in den kürzesten Pfad und der Knoten d wird für die Kante für die erste Region R1 markiert.

Entsprechendes gilt für den Knoten f der Kante (e, f) und den Knoten h in der Kante (h, g).

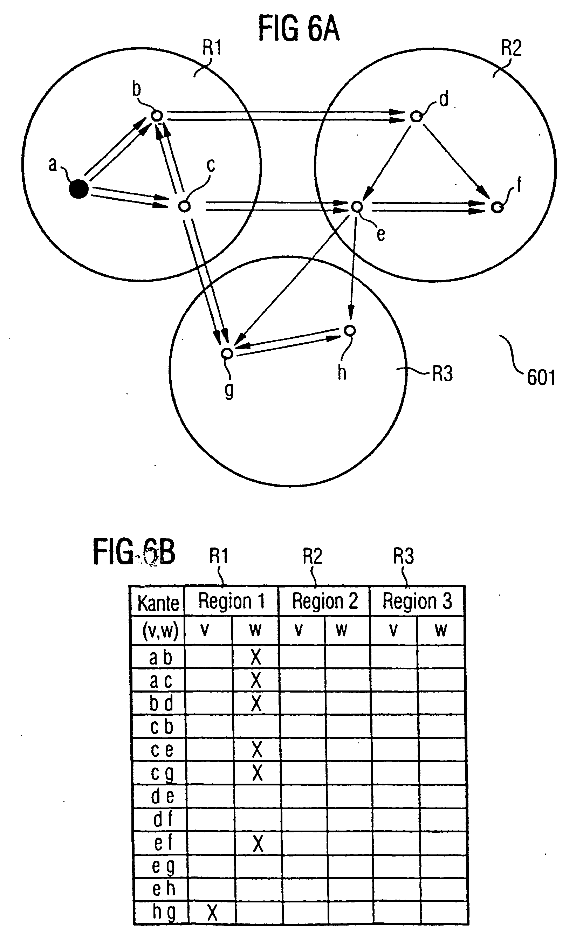

Dasselbe Verfahren wird für einen Baum kürzester Pfade 601 mit einem Wurzelknoten a, dargestellt in Figur 6a, durchgeführt, was zu der Tabelle, dargestellt in Figur 6b führt.

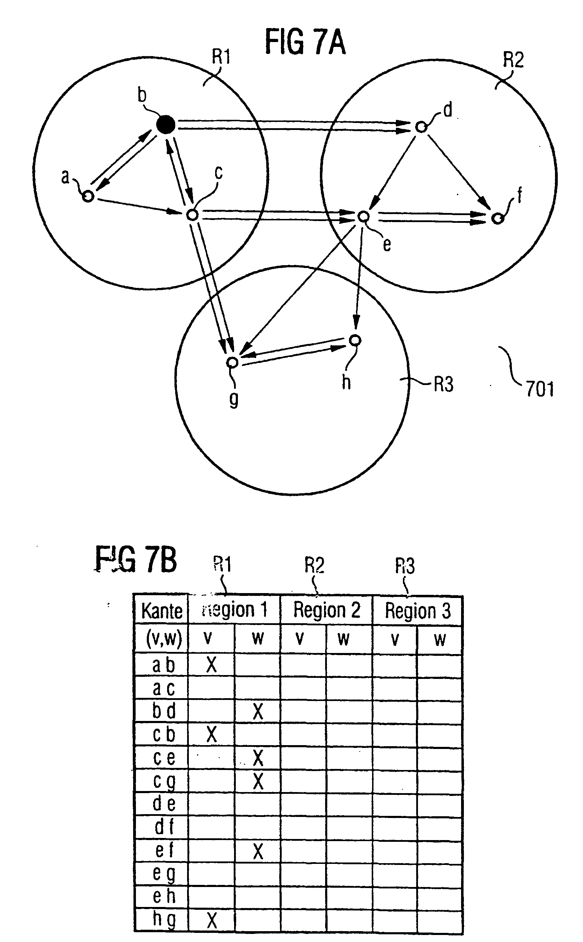

Ein Baum kürzester Pfade 701 mit dem Wurzelknoten b ist in Figur 7a dargestellt und die zugehörigen Markierungen für die erste Region R1 für die jeweiligen Kanten bezüglich des Baums kürzester Pfade 701 mit Wurzelknoten b ist in Figur 7b dargestellt.

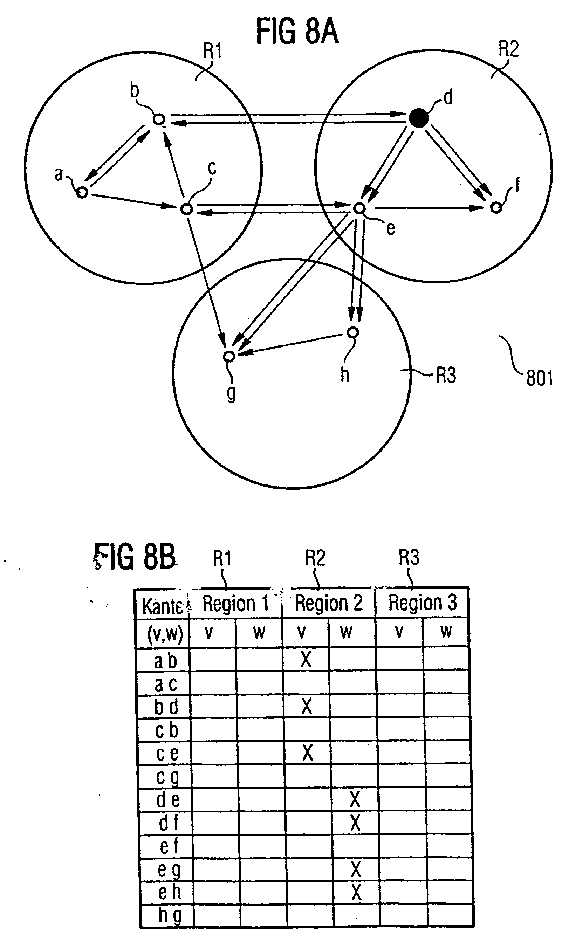

In Figur 8a ist ein Baum kürzester Pfade 801 mit dem Wurzelknoten d in der zweiten Region R2 dargestellt. Figur 8b zeigt die Markierungen für die zweite Region R2 in der entsprechenden Tabelle.

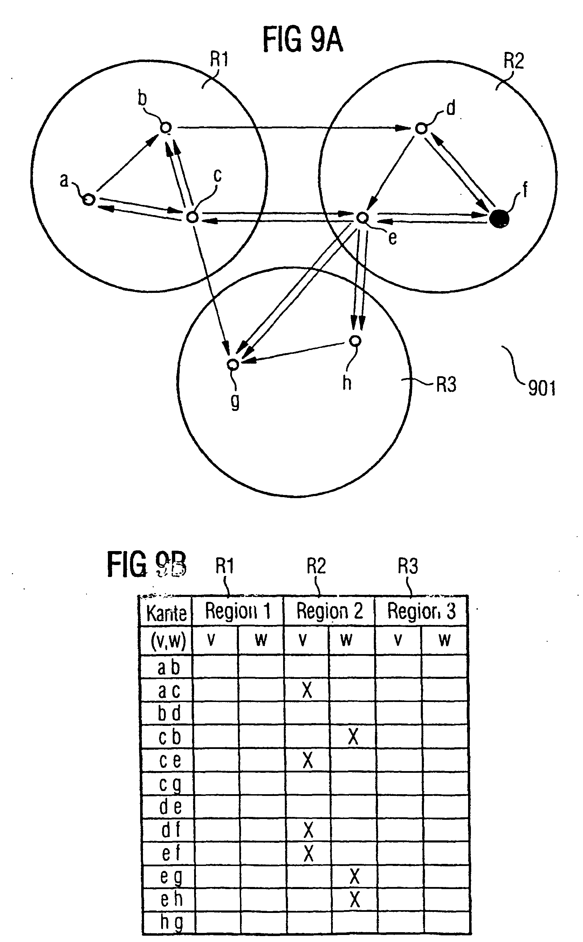

Ein Baum kürzester Pfade 901 mit Wurzelknoten f ist in Figur 9a und die entsprechende Tabelle gemäß dem oben beschriebenen Verfahren ist in Figur 9b dargestellt.

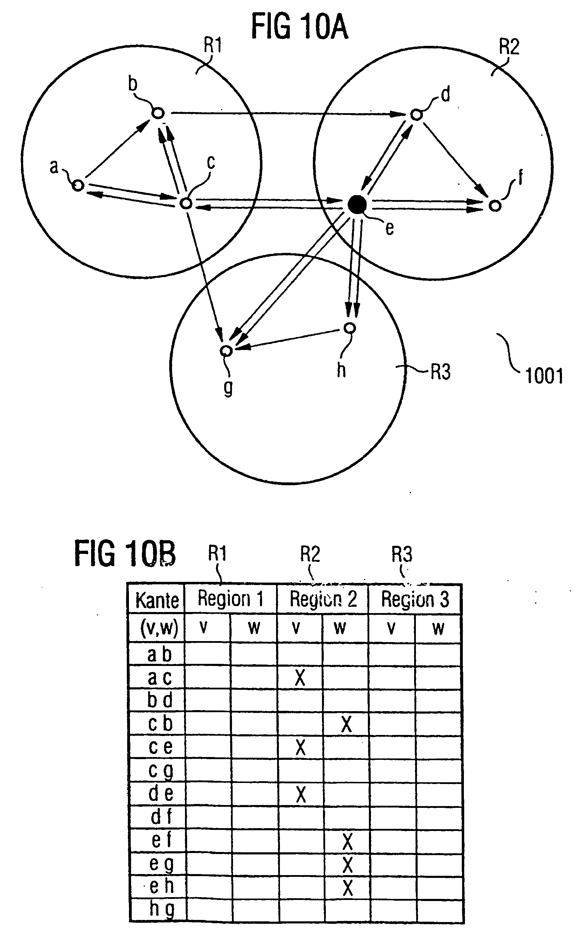

Figur 10a zeigt einen Baum kürzester Pfade 1001 mit Wurzelknoten e und Figur 10b zu dem Baum kürzester Pfade 1001 mit Wurzelknoten f zugehörige Tabelle.

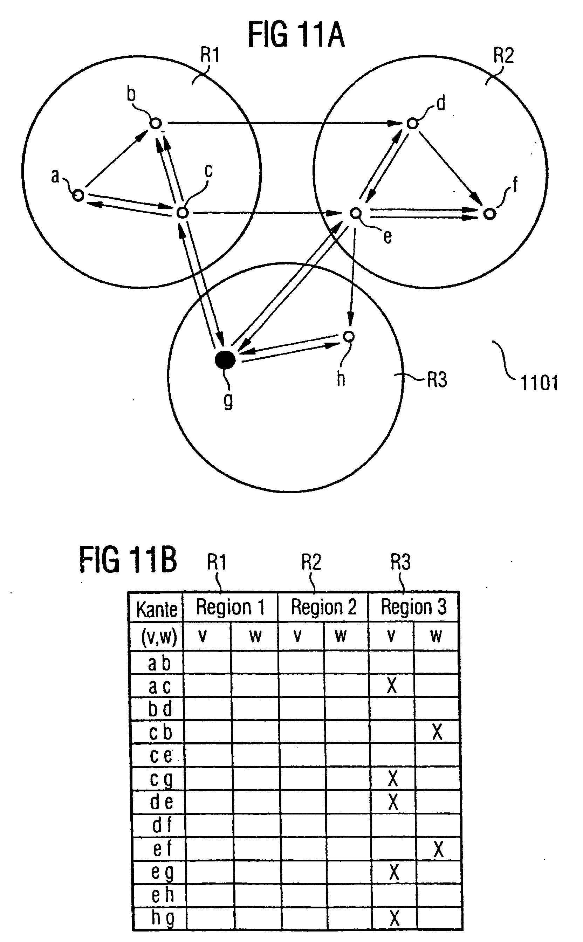

Figur 11a zeigt einen Baum kürzester Pfade 1101 mit Wurzelknoten g und Figur 11b zeigt die resultierende Tabelle für die dritte Region R3 und den Baum kürzester Pfade 1101 mit Wurzelknoten g.

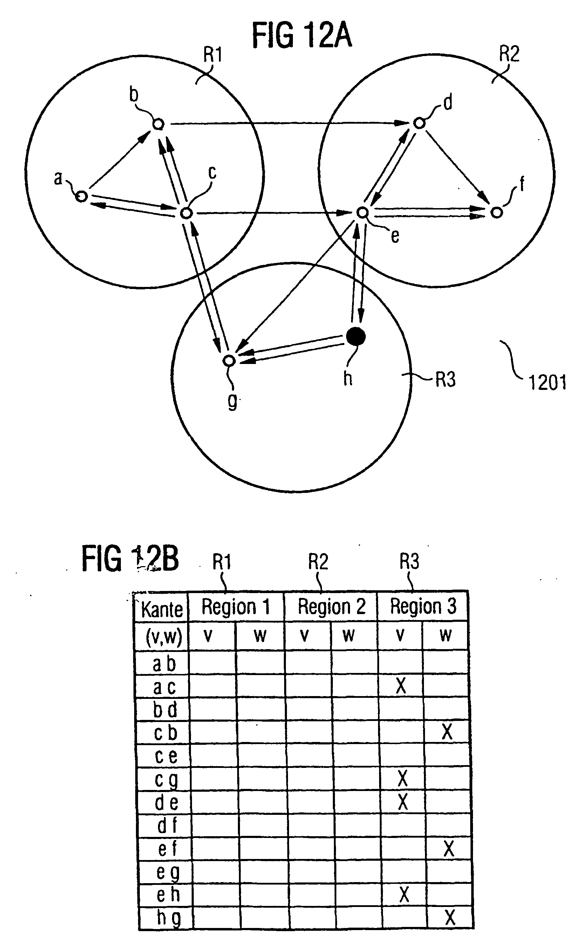

Figur 12a zeigt einen Baum kürzester Pfade 1201 mit Wurzelknoten h und Figur 12 b zeigt die sich ergebende Tabelle nach oben beschriebenen Verfahren für den Baum kürzester Pfade 1201 mit Wurzelknoten h und die dritte Region R3.

In Figur 13b ist eine sich ergebende Gesamttabelle, in der alle markierten Knoten für die jeweilige Kante und das jeweilige Gebiet zusammengefaßt sind nach einer logischen ODER-Verknüpfung aller Tabellen, die in den Figuren 5b, 6b, 7b, 8b, 9b, 10b, 11b, 12b, dargestellt sind.

Mit der gespeicherten Gesamttabelle der markierten Kanten (v, w) des Graphen 1301 ist die Vorverarbeitung abgeschlossen.

Zur eigentlichen Berechnung der kürzesten Pfade in einer Anwendung kann jeder bekannte Algorithmus zur Berechnung kürzester Pfade eingesetzt werden.

Es werden lediglich die folgenden Modifikationen vorgesehen:

Es wird für den vorgegebenen Startknoten und den vorgegebenen Zielknoten ein zugehöriges Startgebiet iₛ, in dem der Startknoten liegt, und Zielgebiet iₜ, in dem der Zielknoten liegt, ermittelt. Bei der Berechnung des kürzesten Pfades vom Startknoten aus werden nur solche Kanten (v, w) berücksichtigt, für die die Kantenwerte vflag[iₜ] und wflag[iₛ] mit dem ersten Binärwert markiert sind.

Anschaulich beschrieben breitet sich somit die Wegesuche vom Startknoten aus äußerst zielgerichtet auf das Zielgebiet iₜ hin aus und fächert sich erst in der Nähe des Zielgebietes iₜ breiter auf.

Im weiteren werden einige Varianten des oben beschriebenen Ausführungsbeispiels dargestellt.

Es kann eine bidirektionale Suche gleichzeitig vom Startknoten und vom Zielknoten aus eingesetzt werden. Auf diese Weise entfällt auch die Auffächerung in der Nähe des Zielgebiets iₜ und es werden fast ausschließlich die Knoten, die im kürzesten Pfad liegen, untersucht.

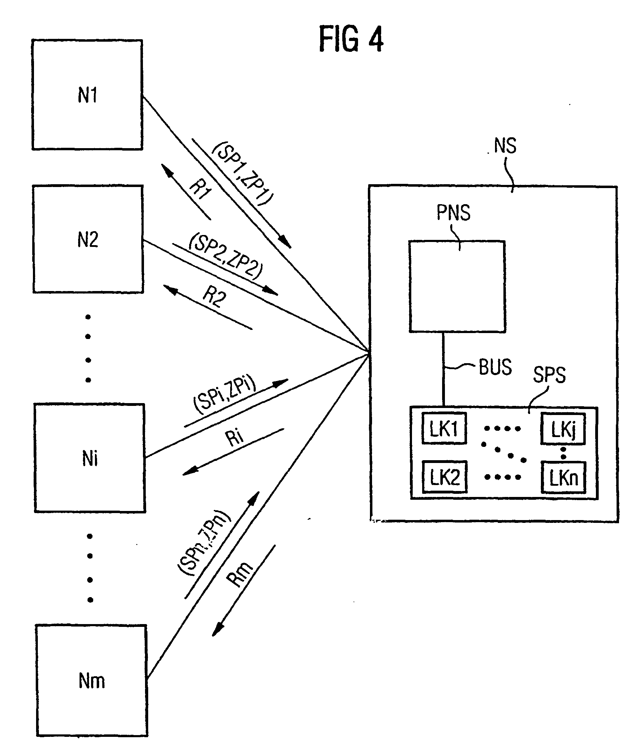

Die Erfindung kann auch in einem zentralisierten System mit einer Vielzahl von Navigationssystemen Ni(i = 1 ... m) und einem Navigationssystem-Server NS eingesetzt werden (vgl. Figur 4). Der Navigationssystem-Server NS weist einen Prozessor PNS des Navigationssystem-Servers NS, sowie einen Speicher SPS mit den gespeicherten Landkarten LKj auf, wobei der Speicher SPS mit dem Prozessor PNS des Navigationssystem-Servers NS gekoppelt ist.

Von den Navigationssystemen Ni werden Anfragen zur Ermittlung kürzester Pfade dem Navigationssystem-Server NS zugeführt. Jede Anfrage enthält eine Angabe der gewünschten Startposition SPi und der gewünschten Zielposition ZPi, für die die Route ermittelt werden soll. Die Ermittlung kürzester Pfade sowie die Vorverarbeitung wird in dem Navigationssystem-Server NS durchgeführt und die optimale Route Ri, die die Kanten des kürzesten Pfades enthält, wird von dem Navigationssystem-Server NS dem jeweiligen Navigationssystem Ni in einer Antwortnachricht Ri übermittelt.

Dabei ist zu bemerken, daß die Vorverarbeitung unabhängig von der Anzahl der Anfragen nur einmal oder- wenn auf veränderte Verkehrssituationen (Staus, Sperrungen von Straßen, usw.) reagiert werden soll - in regelmäßigen Abstanden durchgeführt wird bzw. werden.

Es ist zu bemerken, daß alle Kanten in dem jeweiligen Graphen in dem Ausführungsbeispiel ungerichtet sind. Die Pfeile an den Kanten geben lediglich eine willkürliche Zielrichtung an. Die Erfindung kann ohne weiteres auch bei gerichteten oder teilweise gerichteten Graphen, z.B. bei einem Straßennetz mit Einbahnstraßen eingesetzt werden.

Im Rahmen dieses Dokuments wurden folgende Veröffentlichungen zitiert:
[1] B. V. Cherkassky et al, Shortest Path Algorithms, Theory and Experimental Evaluation, Mathematical Programming, Vol. 73, Nr. 2, S. 129 - 174, 1996
[2] H. P Canibol und E. Müller, Schöner fahren, Focus, Nr. 30, S. 163 - 167, 1997
[3] P. Röbke-Doerr, Pfad-Finder, c't, Heft 9, S. 118 - 119, 1997
[4] DE 195 13 960 A1
[5] DE 196 06 010 A1
[6] S. Jung et al., "Hiti Graph Model of Topographical Rooad Maps in Navigation Systems", Proceedings of the twelfth international Conference on Data Engineering, New Orleans, Feb. 26 -Mar. 1, 1996, Nr. Conf. 12, 26. Febr. 1996, S. 76-84, XP000632587 SU S y W (ED)
[7] B. Liu et al., "Using Knowledge about the Road Network for Route finding", Proceedings of the Conference on Artificial Intelligence for Applications, Los Angeles, Feb. 20-23, 1995, Nr. Conf. 11, 20 Febr. 1995, S. 306-312, XP000547062 Institute of Electrical and Electronic Engineers

## Patentansprüche

1. Verfahren zur rechnergestützten Bearbeitung eines Graphen, der Knoten und Kanten aufweist, wobei der Graph eine Struktur eines technischen Systems beschreibt,
- bei dem die Knoten in mindestens zwei Gebiete gruppiert sind,
- bei dem für jedes Gebiet und für mindestens einen Teil der Knoten des Gebiets folgende Schritte durchgeführt werden:
a) es wird ein Knoten als Wurzelknoten ausgewählt,
b) für den Wurzelknoten wird ein Baum kürzester Pfade in dem Graph mit dem Wurzelknoten als Wurzel des Baums ermittelt,
c) es wird ein Knoten einer Kante des Graphen für das Gebiet dann markiert, wenn ausgehend von dem Knoten zu dem Wurzelknoten die Kante in einem kürzesten Pfad zum Wurzelknoten enthalten ist, wobei die Markierung durch Zuordnung eines binären Werts zu dem Knoten in der Kante des jeweiligen Gebiets erfolgt.

2. Verfahren nach Anspruch 1,
bei dem die Verfahrensschritte a) bis c) für alle Knoten des jeweiligen Gebiets durchgeführt werden.

3. Verfahren nach einem der Ansprüche 1 bis 2,
bei dem die Knoten in eine Vielzahl Gebiete gruppiert sind.

4. Verfahren nach einem der Ansprüche 1 bis 3,
bei dem unter Verwendung der markierten Knoten ein kürzester Pfad zwischen einem vorgegebenen Startknoten und einem vorgegebenen Zielknoten ermittelt wird.

5. Verfahren nach Anspruch 4,
bei dem zur Ermittlung des kürzesten Pfades zwischen dem Startknoten und dem Zielknoten folgende Schritte durchgeführt werden:
- es wird ein Startgebiet ermittelt und gespeichert, zu dem der Startknoten gruppiert ist,
- es wird ein Zielgebiet ermittelt und gespeichert, zu dem der Zielknoten gruppiert ist,
- bei der Ermittlung des kürzesten Pfades ausgehend vom Startknoten werden nur die Kanten berücksichtigt, für die gilt:
-- ausgehend von dem Startknoten in dem Startgebiet ist ein erster Knoten der Kante für das Zielgebiet markiert, und
-- ausgehend von dem Startknoten in dem Startgebiet ist ein zweiter Knoten der Kante für das Startgebiet markiert.

6. Verfahren nach Anspruch 5,
bei dem zur Ermittlung des kürzesten Pfades zwischen dem Startknoten und dem Zielknoten folgende Schritte durchgeführt werden:
- bei der Ermittlung des kürzesten Pfades ausgehend vom Zielknoten werden nur die Kanten berücksichtigt, für die gilt:
-- ausgehend von dem Zielknoten in dem Zielgebiet ist ein erster Knoten der Kante für das Startgebiet markiert, und
-- ausgehend von dem Zielknoten in dem Zielgebiet ist ein zweiter Knoten der Kante für das Zielgebiet markiert.

7. Verfahren nach einem der Ansprüche 1 bis 6,
eingesetzt zur Routenermittlung zwischen einem Startort und einem Zielort einer digitalisierten Landkarte in einem rechnergestützten Navigationssystem, wobei der Inhalt der Landkarte durch den Graphen beschrieben wird.

8. Verfahren nach einem der Ansprüche 1 bis 7,
bei dem zur Ermittlung eines kürzesten Pfades das Moore/Pape-Verfahren eingesetzt wird.

9. Anordnung zur rechnergestützten Bearbeitung eines Graphen, der Knoten und Kanten aufweist, mit einer Prozessoreinheit, die derart eingerichtet ist, daß
- die Knoten in mindestens zwei Gebiete gruppiert sind,
- für jedes Gebiet und für mindestens einen Teil der Knoten des Gebiets folgende Schritte durchgeführt werden:
a) es wird ein Knoten als Wurzelknoten ausgewählt,
b) für den Wurzelknoten wird ein Baum kürzester Pfade in dem Graph mit dem Wurzelknoten als Wurzel des Baums ermittelt,
c) es wird ein Knoten einer Kante des Graphen für das Gebiet dann markiert, wenn ausgehend von dem Knoten zu dem Wurzelknoten die Kante in einem kürzesten Pfad zum Wurzelknoten enthalten ist, wobei die Markierung durch Zuordnung eines binären Werts zu dem Knoten in der Kante des jeweiligen Gebiets erfolgt.

10. Anordnung nach Anspruch 9,
bei der die Prozessoreinheit derart eingerichtet ist, daß die Verfahrensschritte a) bis c) für alle Knoten des jeweiligen Gebiets durchgeführt werden.

11. Anordnung nach einem der Ansprüche 9 bis 10,
bei der die Prozessoreinheit derart eingerichtet ist, daß die Knoten in eine Vielzahl Gebiete gruppiert sind.

12. Anordnung nach einem der Ansprüche 9 bis 11,
bei der die Prozessoreinheit derart eingerichtet ist, daß unter Verwendung der markierten Knoten ein kürzester Pfad zwischen einem vorgegebenen Startknoten und einem vorgegebenen Zielknoten ermittelt wird.

13. Anordnung nach Anspruch 12,
bei der die Prozessoreinheit derart eingerichtet ist, daß zur Ermittlung des kürzesten Pfades zwischen dem Startknoten und dem Zielknoten folgende Schritte durchgeführt werden:
- es wird ein Startgebiet ermittelt und gespeichert, zu dem der Startknoten gruppiert ist,
- es wird ein Zielgebiet ermittelt und gespeichert, zu dem der Zielknoten gruppiert ist,
- bei der Ermittlung des kürzesten Pfades ausgehend vom Startknoten werden nur die Kanten berücksichtigt, für die gilt:
-- ausgehend von dem Startknoten in dem Startgebiet ist ein erster Knoten der Kante für das Zielgebiet markiert, und
-- ausgehend von dem Startknoten in dem Startgebiet ist ein zweiter Knoten der Kante für das Startgebiet markiert.

14. Anordnung nach Anspruch 13,
bei der die Prozessoreinheit derart eingerichtet ist, daß zur Ermittlung des kürzesten Pfades zwischen dem Startknoten und dem Zielknoten folgende Schritte durchgeführt werden:
- bei der Ermittlung des kürzesten Pfades ausgehend vom Zielknoten werden nur die Kanten berücksichtigt, für die gilt:
-- ausgehend von dem Zielknoten in dem Zielgebiet ist ein erster Knoten der Kante für das Startgebiet markiert, und
-- ausgehend von dem Zielknoten in dem Zielgebiet ist ein zweiter Knoten der Kante für das Zielgebiet markiert.

15. Anordnung nach einem der Ansprüche 9 bis 14,
- bei dem eine digitalisierte Landkarte verwendet wird, wobei der Inhalt der Landkarte durch einen Graphen mit Knoten und Kanten beschrieben wird,
- bei dem zur Routenermittlung zwischen einem Startort und einem Zielort der Landkarte der bearbeitete Graph verwendet wird.

## Claims

1. Method for computer-assisted processing of a graph that has nodes and edges, with the graph describing a structure of a technical system,
- with the nodes being grouped in at least two regions,
- with the following steps being performed for each region and for at least one part of the nodes of the region:
a) a node is selected as a root node,
b) a tree of the shortest route in the graph with the root node as the root of the tree is determined for the root node,
c) a node for an edge of the graph for the region is then marked if, starting from the node going to the root node, the edge is contained in a shortest route to the root node, with the marking taking place by assigning a binary value to the node in the edge of the particular region.

2. Method in accordance with claim 1,
with the procedural steps a) to c) being performed for all nodes of the particular region.

3. Method in accordance with claims 1 to 2,
with the nodes being grouped in a number of regions.

4. Method in accordance with one of claims 1 to 3,
with a shortest route between a given starting node and a given destination node being determined by using the marked nodes.

5. Method in accordance with claim 4,
with the following steps being performed for determining the shortest route between the starting node and destination node:
- a starting region is determined and stored, to which the starting node is grouped,
- a destination region is determined and stored, to which the destination node is grouped,
- when determining the shortest route starting from the starting node, only the edges are taken into account for which the following applies:
-- starting from the starting node in the starting region, a first node of the edge for the destination region is marked and
-- starting from the starting node in the starting region, a second node of the edge for the starting region is marked.

6. Method in accordance with claim 5,
with the following steps being carried out to determine the shortest route between the starting node and destination node:
- when determining the shortest route starting from the destination node, only the edges for which the following applies are taken into account:
-- starting from the destination node in the destination region, a first node of the edge is marked for the starting region and
-- starting from the destination node in the destination region a second node for the edge of the destination region is marked.

7. Method in accordance with one of claims 1 to 6,
used for route determining between a starting location and a destination location of a digitalized map in a computer-assisted navigation system, with the content of the map being described by the graph.

8. Method in accordance with one of claims 1 to 7,
with the Moore/Pape method being used to determine a shortest route.

9. Arrangement for computer-assisted processing of a graph that has nodes and edges, with a processor unit that is set up in such a way that
- the nodes are grouped in at least two regions,
- the following steps are carried out for each region and for at least one part of the nodes of the region:
a) a node is selected as a root node,
b) for the root node, a tree of the shortest route in the graph with the root node as a root of the tree is determined,
c) a node of an edge of the graph for the region is then marked, if starting from the node going to the root node the edge is contained in a shortest route to the root node, with the marking taking place by assigning a binary value to the node in the edge of the particular region.

10. Arrangement in accordance with claim 9,
with the processor unit being set up in such a way that procedural steps a) to c) are carried out for all nodes of the particular region.

11. Arrangement in accordance with one of claims 9 to 10,
with the processor unit being set up in such a way that the nodes are grouped in a number of regions.

12. Arrangement in accordance with one of claims 9 to 11,
with the processor unit being set up in such a way that when using the marked nodes a shortest route between a specified starting node and a specified destination node is determined.

13. Arrangement in accordance with claim 12,
with the processor unit being set up in such a way that the following steps are performed to determine the shortest route between the starting node and destination node:
- a starting region is determined and stored, to which the starting node is grouped,
- a destination region is determined and stored, to which the destination node is grouped,
- when determining the shortest route starting from the starting node, only the edges for which the following applies are considered:
-- starting from the starting node in the starting region, a first node of the edge for the destination region is marked and,
-- starting from the starting node in the starting region, a second node of the edge for the starting region is marked.

14. Arrangement in accordance with claims 13,
with the processor unit being set up in such a way that to determine the shortest route between the starting node and destination node the following steps are performed:
- when determining the shortest route starting from the destination node only the edges are taken into account for which the following applies:
-- starting from the destination node in the destination region, a first node of the edge for the starting region is marked and
-- starting from the destination node in the destination region, a second node of the edge for the destination region is marked.

15. Arrangement in accordance with one of claims 9 to 14,
- with a digitalized map being used with the content of the map being described by a graph with nodes and edges,
- with the processed graph being used for route determination between a starting location and destination location of the map.

## Revendications

1. Procédé destiné au traitement assisté par ordinateur d'un graphe qui comporte des noeuds et des arêtes, le graphe décrivant une structure d'un système technique,
- dans lequel les noeuds sont groupés dans au moins deux zones,
- dans lequel, pour chaque zone et pour au moins une partie des noeuds d'une zone, les étapes suivantes sont exécutées:
a) on choisit un noeud comme noeud racine,
b) pour le noeud racine, on détermine un arbre des chemins les plus courts dans le graphe avec le noeud racine comme racine de l'arbre,
c) on marque un noeud du graphe pour la zone lorsque, en allant du noeud vers le noeud racine, l'arête est comprise dans le chemin le plus court vers le noeud racine, la marque se faisant en allouant une valeur binaire au noeud dans l'arête de la zone correspondante.

2. Procédé selon la revendication 1
dans lequel les étapes du procédé a) à c) sont exécutées pour tous les noeuds de la zone correspondante.

3. Procédé selon l'une des revendications 1 à 2
dans lequel les noeuds sont groupés dans une pluralité de zones.

4. Procédé selon l'une des revendications 1 à 3
dans lequel, en utilisant les noeuds marqués, on détermine un chemin le plus court entre un noeud de départ donné et un noeud de destination donné.

5. Procédé selon la revendication 4
dans lequel, pour la détermination du chemin le plus court entre le noeud de départ et le noeud de destination, on exécute les étapes suivantes:
- on détermine et on mémorise une zone de départ dans laquelle le noeud de départ fait partie d'un groupe,
- on détermine et on mémorise une zone de destination dans laquelle le noeud de destination fait partie d'un groupe,
- lors de la détermination du chemin le plus court, en partant du noeud de départ, on ne tient compte que des arêtes pour lesquelles:
-- en partant du noeud de départ dans la zone de départ, on marque un premier noeud de l'arête pour la zone de destination et
-- en partant du noeud de départ dans la zone de départ, on marque un deuxième noeud de l'arête pour la zone de départ.

6. Procédé selon la revendication 5
dans lequel, pour la détermination du chemin le plus court entre le noeud de départ et le noeud de destination, on exécute les étapes suivantes:
- lors de la détermination du chemin le plus court, en partant du noeud de départ, on ne tient compte que des arêtes pour lesquelles:
-- en partant du noeud de départ dans la zone de départ, on marque un premier noeud de l'arête pour la zone de départ et
-- en partant du noeud de départ dans la zone de départ, on marque un deuxième noeud de l'arête pour la zone de destination.

7. Procédé selon l'une des revendications 1 à 6,
mis en oeuvre pour la détermination d'un trajet entre un lieu de départ et un lieu de destination d'une carte topographique numérisée dans un système de navigation assisté par ordinateur, le contenu de la carte topographique étant décrit par le graphe.

8. Procédé selon l'une des revendications 1 à 7
dans lequel, pour la détermination d'un chemin le plus court, on utilise la méthode de Moore/Pape.

9. Dispositif destiné au traitement assisté par ordinateur d'un graphe, qui a des noeuds et des arêtes, comportant une unité à processeur conçue de telle sorte que
- les noeuds sont groupés dans au moins deux zones,
- pour chaque zone et pour au moins une partie des noeuds d'une zone, les étapes suivantes sont exécutées:
a) un noeud est choisi comme noeud racine,
b) pour le noeud racine, un arbre des chemins les plus courts est déterminé dans le graphe avec le noeud racine comme racine de l'arbre,
c) un noeud d'une arête du graphe est marqué pour la zone lorsque, en allant du noeud vers le noeud racine, l'arête est comprise dans le chemin le plus court vers le noeud racine, la marque se faisant en allouant une valeur binaire au noeud dans l'arête de la zone correspondante.

10. Dispositif selon la revendication 9
dans lequel l'unité à processeur est conçue de telle sorte que les étapes du procédé a) à c) sont exécutées pour tous les noeuds de la zone correspondante.

11. Dispositif selon l'une des revendications 9 à 10
dans lequel l'unité à processeur est conçue de telle sorte que les noeuds sont groupés dans une pluralité de zones.

12. Dispositif selon l'une des revendications 9 à 11
dans lequel l'unité à processeur est conçue de telle sorte que, en utilisant les noeuds marqués, on détermine un chemin le plus court entre un noeud de départ donné et un noeud de destination donné.

13. Dispositif selon la revendication 12
dans lequel l'unité à processeur est conçue de telle sorte que, pour la détermination du chemin le plus court entre le noeud de départ et le noeud de destination, on exécute les étapes suivantes:
- on détermine et on mémorise une zone de départ dans laquelle le noeud de départ fait partie d'un groupe,
- on détermine et on mémorise une zone de destination dans laquelle le noeud de destination fait partie d'un groupe,
- lors de la détermination du chemin le plus court, en partant du noeud de départ, on ne tient compte que des arêtes pour lesquelles:
-- en partant du noeud de départ dans la zone de départ, un premier noeud de l'arête est marqué pour la zone de destination et
-- en partant du noeud de départ dans la zone de départ, un deuxième noeud de l'arête est marqué pour la zone de départ.

14. Dispositif selon la revendication 13
dans lequel l'unité à processeur est conçue de telle sorte que, pour la détermination du chemin le plus court entre le noeud de départ et le noeud de destination, on exécute les étapes suivantes:
- lors de la détermination du chemin le plus court, en partant du noeud de destination, on ne tient compte que des arêtes pour lesquelles:
-- en partant du noeud de destination dans la zone de destination, un premier noeud de l'arête est marqué pour la zone de départ et
-- en partant du noeud de destination dans la zone de destination, un deuxième noeud de l'arête est marqué pour la zone de destination.

15. Dispositif selon l'une des revendications 9 à 14,
- dans lequel on utilise une carte topographique numérisée, le contenu de la carte topographique étant décrit par un graphe ayant des noeuds et des arêtes,
- dans lequel, pour la détermination du trajet entre un lieu de départ et un lieu de destination de la carte topographique, on utilise le graphe traité.
